# EUROPÄISCHE PATENTANMELDUNG

(11) **EP 3 051 068 A1**
(43) Veröffentlichungstag der Anmeldung: **03.08.2016**
(21) Anmeldenummer: 16151279.3
(22) Anmeldetag: 14.01.2016
(51) Int. Cl.: F01D 9/04, F01D 11/00

(54) **LEITSCHAUFELRING FÜR EINE STRÖMUNGSMASCHINE UND ADDITIVES HERSTELLUNGSVERFAHREN**

(30) Priorität: 02.02.2015 DE 102015201782
(71) Anmelder: MTU Aero Engines AG, 80995 München (DE)
(72) Erfinder: Liebl, Christian, 85461 Bockhorn (DE); Scharl, Richard, 85757 Karlsfeld (DE); Kirchner, Daniel, 80639 München (DE); Buck, Alexander, 80997 München (DE); Heß, Thomas, 81541 München (DE)

(57) **Zusammenfassung**

Die Erfindung betrifft einen Leitschaufelring (10) mit mindestens einem Leitschaufelringsegment für eine Strömungsmaschine umfassend eine Vielzahl von radial um eine Drehachse angeordnete Leitschaufeln (12), ein an den Leitschaufeln (12) radial außenseitig angeordnetes Außendeckband (14) und ein an den Leitschaufeln (12) radial innenseitig angeordnetes Innendeckband (16), wobei das Außendeckband (14) oder das Innendeckband (16) mindestens einen Dehnungsspalt (18) aufweist, wobei das Leitschaufelringsegment mit den Leitschaufeln (12), dem Außendeckband (14) und dem Innendeckband (16) einstückig ausgebildet ist und der mindestens eine Dehnungsspalt (18) mittels jeweils mindestens einer in dem jeweiligen Dehnungsspalt (18) angeordneten Dichtungseinrichtung (24) abgedichtet sind. Weiterhin betrifft die Erfindung eine Gasturbine, insbesondere ein Flugtriebwerk mit einem solchen Leitschaufelring (10) und ein additives Herstellungsverfahren eines solchen Leitschaufelrings (10).

## Beschreibung

Die Erfindung betrifft einen Leitschaufelring für eine Strömungsmaschine gemäß dem Oberbegriff des Patentanspruchs 1. Des Weiteren betrifft die Erfindung eine Gasturbine mit einem solchen Leitschaufelring und ein Verfahren zur Herstellung eines solchen Leitschaufelrings.

Aus der DE 10 2009 013 819A1 ist ein Leitschaufelring für eine Strömungsmaschine bekannt. Dieser Leitschaufelring umfasst eine Vielzahl von radial um eine Drehachse angeordnete Leitschaufeln, mittels welchen eine Gasströmung in eine Strömungsmaschine umgelenkt werden kann. Der Leitschaufelring umfasst ein an den Leitschaufeln radial außenseitig angeordnetes Außendeckband und ein an den Leitschaufeln radial innenseitig angeordnetes Innendeckband. Der Leitschaufelring besteht dabei aus einer Vielzahl von einzelnen Leitschaufelringsegmenten, welche mit einem thermischen Fügeverfahren zusammengeschweißt sind.

Nachteilig ist, dass ein solcher Leitschaufelring bei besonders großen Abmessungen und/oder höheren Betriebstemperaturen der Strömungsmaschine den entstehenden thermischen Belastungen nicht ohne Weiteres standhalten kann. Eine Möglichkeit zur Abhilfe ist, entweder das Innendeckband oder das Außendeckband aufzutrennen, sodass das Außendeckband oder das Innendeckband eine Mehrzahl von entlang der Umfangsrichtung voneinander beabstandete Dehnungsspalten aufweist. Nachteilig an solchen Dehnungsspalten ist jedoch, dass der Leitschaufelring hierdurch eine Leckage hat. Der Gasstrom kann also wenigstens teilweise aus dem Leitschaufelring und gegebenenfalls damit auch aus der Strömungsmaschine entweichen. Dadurch sinkt die Effizienz des Leitschaufelrings und damit auch die Effizienz der Strömungsmaschine.

Aus der DE 6601221 U ist ein Leitschaufelring mit mindestens zwei Leitschaufelringsegmenten für eine Strömungsmaschine umfassend eine Vielzahl von radial um eine Drehachse angeordnete Leitschaufeln, ein an den Leitschaufeln radial außenseitig angeordnetes Außendeckband und ein an den Leitschaufeln radial innenseitig angeordnetes Innendeckband bekannt. Das Innendeckband weist eine Mehrzahl von entlang der Umfangsrichtung voneinander beabstandeten Dehnungsspalten. Diese Dehnungsspalte gehen jedoch nicht durch das ganze Innendeckband in Umfangsrichtung, sodass weiterhin hohe Belastungen auf das Innendeckband wirken können.

Aufgabe der vorliegenden Erfindung ist es, einen Leitschaufelring, eine Gasturbine und ein Verfahren zur Herstellung eines Leitschaufehings zu schaffen, womit eine Strömungsmaschine beziehungsweise eine Gasturbine besonders effizient ist.

Diese Aufgabe wird erfindungsgemäß durch einen Leitschaufelring mit den Merkmalen des Patentanspruchs 1 gelöst. Des Weiteren wird diese Aufgabe durch eine Gasturbine mit den Merkmalen des Patentanspruchs 13 und ein Verfahren zur additiven Herstellung eines Leitschaufelrings mit den Merkmalen des Patentanspruchs 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Leitschaufelrings als vorteilhafte Ausgestaltungen des Verfahrens und der Gasturbine und umgekehrt anzusehen sind.

Ein erster Aspekt der Erfindung betrifft einen Leitschaufelring für eine Strömungsmaschine mit mindestens einem Leitschaufehingsegment umfassend mindestens eine radial um eine Drehachse angeordnete Leitschaufel, ein an der Leitschaufel radial außenseitig angeordnetes Außendeckband und ein an der Leitschaufel radial innenseitig angeordnetes Innendeckband, wobei das Außendeckband oder das Innendeckband mindestens einen Dehnungsspalt aufweist. Zudem ist das Leitschaufehingsegment mit der Leitschaufel, dem Außendeckband und dem Innendeckband einstückig ausgebildet, wobei der mindestens eine Dehnungsspalt mittels mindestens einer in dem Dehnungsspalt angeordneten Dichtungseinrichtung abgedichtet ist. Ein einstückiges Leitschaufelringsegment kann auch als integrales Leitschaufehingsegment bezeichnet werden. Die Dichtungseinrichtung in dem Dehnungsspalt bewirkt eine besonders hohe Effizienz des Leitschaufelrings, da so keine oder zumindest nur eine besonders reduzierte Leckage an dem oder den Dehnungsspalten der Leitschaufelringsegmente auftritt. Damit kann ein integrales Leitschaufelringsegment auch bei besonders großen Strömungsmaschinen und/oder Strömungsmaschinen mit besonders hohen Betriebstemperaturen eingesetzt werden, ohne dass aufgrund der dann notwendigen Dehnungsspalte die Effizienz des Leitschaufelrings reduziert ist.

In weiterer vorteilhafter Ausgestaltung der Erfindung ist es vorgesehen, dass das Leitschaufelringsegment mit einem additiven Fertigungsverfahren hergestellt ist. Dadurch, dass das Leitschaufelringsegment mit der mindestens einen Leitschaufel, dem Außendeckband und dem Innendeckband mit einem additiven Fertigungsverfahren einstückig hergestellt ist, ist der Leitschaufelring besonders kostengünstig herstellbar. Ein additives Fertigungsverfahren ist ein Urformverfahren, bei welchem Bauteile schichtweise erzeugt werden. Beispiele für additive Fertigungsverfahren sind das Lasersintern oder Laserschmelzen und das sogenannte 3D-Drucken. Dabei wird ein Ausgangsstoff, welcher beispielsweise in Pulverform oder flüssiger Form vorliegt, durch Aufschmelzen mit einem Hochenergiestrahl, wie beispielsweise einem Laserstrahl oder einem Elektronenstrahl, schichtweise zu dem fertigen Bauteil verschmolzen. Es sind keine zusätzlichen Fertigungsschritte zum Einbringen der Dehnungsspalte nötig. Die einzelnen Leitschaufelringsegmente können zum Verbinden beispielsweise miteinander verschraubt oder verschweißt sein.

Weiterhin vorteilhaft ist es, wenn der Leitschaufelring aus einem einzigen, 360° um die Drehachse umlaufenden Leitschaufehingsegment besteht. Ein solcher Leitschaufelring wird auch als integraler Leitschaufelring bezeichnet. Vorteilhafterweise sind keine zusätzlichen Fertigungsschritte zum Verbinden einzelner Leitschaufelringsegmente miteinander notwendig. Insbesondere die additive Fertigung eines derartigen, kompletten Leitschaufehings ist besonders kostengünstig.

Alternativ kann der Leitschaufelring beispielsweise aus zwei Leitschaufelringsegmenten gebildet sein. Dann ist die Strömungsmaschine besonders einfach montierbar, insbesondere kann sie radial montiert werden. Eine geringe Anzahl von Leitschaufelringsegmenten bedeutet einen besonders geringen Montageaufwand und eine besonders geringe mögliche Leckage an den Verbindungsstellen zwischen den Leitschaufelringsegmenten.

In weiterer vorteilhafter Ausgestaltung des erfindungsgemäßen Leitschaufelrings ist es vorgesehen, dass die Dichtungseinrichtung einstückig mit dem Außendeckband oder dem Innendeckband hergestellt ist. Dadurch ist die Herstellung des Leitschaufehings besonders kostengünstig. Außerdem kann der Leitschaufelring so in einem additiven Herstellungsverfahren besonders schnell gefertigt werden. Es ist kein zusätzlicher Fertigungsschritt zur Herstellung der Dichtungseinrichtung notwendig. Außerdem kann so die Dichtungseinrichtung direkt in dem Leitschaufelring beziehungsweise dem zugeordneten Außendeckband oder Innendeckband integriert sein. Dadurch ist es möglich, Dichtungseinrichtungen zu schaffen, welche mit herkömmlichen Fertigungsverfahren, wie beispielsweise dem segmentweisen Erstellen des Leitschaufehings und dem anschließenden thermischen Fügen der Leitschaufelringsegmente, nicht herstellbar sind. Beispielsweise können auch solche Dichtungseinrichtungen vorgesehen werden, welche bei einem einstückig hergestellten Leitschaufelring nicht nachträglich an- oder einbringbar sind. Insbesondere können so Dichtungseinrichtungen geschaffen werden, welche die jeweiligen Dehnungsspalten besonders gut abdichten. Dabei kann die Dichtungseinrichtung einstückig mit dem Leitschaufelringsegment, nämlich der mindestens einen Leitschaufel, dem Außendeckband und dem Innendeckband hergestellt sein. Dadurch ist besonders kostengünstig ein integraler Leitschaufelring herstellbar.

In weiterer vorteilhafter Ausgestaltung des erfindungsgemäßen Leitschaufehings ist es vorgesehen, dass das Innendeckband die Dehnungsspalte aufweist. Bei vielen Strömungsmaschinen ist das Innendeckband der höchsten thermischen Belastung ausgesetzt und erfährt deswegen auch die größte thermische Ausdehnung. Deswegen ist eine Positionierung der Dehnungsspalte an dem Innendeckband besonders sinnvoll. Das Außendeckband kann dann in vorteilhafter Weise mit seiner größeren Oberfläche zum Lagern des Leitschaufelrings benutzt werden. Alternativ kann es vorgesehen sein, dass das Außendeckband die Dehnungsspalte aufweist. Dies ist insbesondere vorteilhaft, wenn das Außendeckband der höchsten thermischen Belastung unterliegt. Dies kann beispielsweise der Fall sein, wenn das Innendeckband aktiv gekühlt wird.

Besonders vorteilhaft für den erfindungsgemäßen Leitschaufelring ist es, wenn die Dichtungseinrichtung und das Außendeckband und/oder das Innendeckband aus dem gleichen Material ausgebildet sind. Vorzugsweise ist dabei wenigstens das Deckband, welches die Dehnungsspalte aufweist, in welchem zudem die Dichtungseinrichtung angeordnet ist, aus dem gleichen Material wie die Dichtungseinrichtung gebildet. In diesem Fall können das entsprechende Deckband und die Dichtungseinrichtung besonders kostengünstig gemeinsam in einem additiven Fertigungsverfahren hergestellt werden. Außerdem kann so eine besonders robuste Verbindung zwischen dem entsprechenden Deckband und der Dichtungseinrichtung geschaffen werden. Zudem weisen aus demselben Material gebildete Komponenten auch die gleichen Eigenschaften unter thermischer Belastung auf, insbesondere einen gleichen thermischen Dehnungskoeffizienten. Zusätzliche Belastungen des Leitschaufelrings durch unterschiedliches Materialverhalten bei betriebsbedingten Belastungen können so vermieden werden.

Alle Komponenten des erfindungsgemäßen Leitschaufehings können vorzugsweise aus einem einzigen Material gebildet sein. Ein besonders widerstandsfähiges Material, welches hierfür geeignet ist, ist beispielsweise eine Nickelbasislegierung. Ein additives Herstellungsverfahren unter Verwendung eines einzigen Materials ist besonders kostengünstig. Vorzugsweise ist deswegen der gesamte Leitschaufelring aus dem gleichen Material gebildet. Alternativ können die verschiedenen Komponenten des Leitschaufelrings auch aus unterschiedlichen Materialien gebildet sein. Der Vorteil ist dabei, dass der Leitschaufelring so besonders belastungsgerecht konstruiert werden kann und/oder besonders leicht sein kann.

In weiterer vorteilhafter Ausgestaltung der Erfindung ist es vorgesehen, dass die Dichtungseinrichtung ein lose in einem Aufnahmebereich des Dehnungsspalts gelagertes Dichtungselement umfasst. Eine so ausgebildete Dichtungseinrichtung ist besonders kostengünstig und einfach zu fertigen. Das Dichtungselement kann beispielsweise als Scheibe ausgebildet sein, welche lose in einem korrespondierenden Aufnahmebereich gelagert ist. Dabei können auch Fugen im Aufnahmebereich vorgesehen sein, wodurch eine mechanische Belastung der Dichtungseinrichtung durch thermische Ausdehnung vermieden werden kann. Die Dichtungseinrichtung kann dabei auch ein Federelement umfassen, welche das Dichtungselement mit einer Kraft zum Abdichten beaufschlagt. Insbesondere bei Verwendung eines additiven Fertigungsverfahrens zum Herstellen der Leitschaufelringsegmente muss die Dichtungseinrichtung nicht mehr nachträglich montiert werden.

In weiterer vorteilhafter Ausgestaltung des Leitschaufehings ist es vorgesehen, dass die Dichtungseinrichtung als Labyrinthdichtung einstückig mit dem die Dehnungsspalte aufweisenden Außendeckband oder Innendeckband ausgebildet ist. Eine Labyrinthdichtung dichtet den Dehnungsspalt besonders gut ab und ist zudem besonders robust. Zudem ist der Leitschaufelring so besonders kostengünstig herstellbar, da die Dichtungseinrichtung einstückig direkt mit dem korrespondierenden Deckband gefertigt werden kann. Gerade bei einem additiven Fertigungsverfahren können also beispielsweise jeweilige Zapfenelemente, welche die Labyrinthdichtung bilden, an einem Randbereich des Deckbands beim Dehnungsspalt direkt einteilig mitgefertigt werden. In weiterer vorteilhafter Ausgestaltung des Leitschaufehings ist es vorgesehen, dass die Dichtungseinrichtung ein elastisch und/oder plastisch verformbares Dichtungselement aufweist, welches einstückig mit dem die Dehnungsspalte aufweisenden Außendeckband oder Innendeckband ausgebildet ist. Die Vorteile einer einstückigen Fertigung des Dichtungselements mit dem korrespondierenden Deckband geltend auch in dieser Ausführungsform. Durch die plastische und/oder elastische Verformbarkeit des Dichtungselements kann die Dichtungseinrichtung besonders gut Belastungen durch eine Verformung, insbesondere thermische Verformung, des Außendeckbands oder Innendeckbands standhalten. Gleichzeitig können die so ausgebildeten Dichtungseinrichtungen besonders gut den Leitschaufelring abdichten. Beispielsweise ist es so möglich, dass die Dichtungseinrichtung an den beiden radial umlaufend gegenüberliegenden Seiten des Dehnungsspalts diese geschlossen miteinander verbindet. In diesem Fall kann der Dehnungsspalt durch die Dichtungseinrichtung also vollständig abgedichtet werden.

Dabei ist es besonders vorteilhaft, wenn das elastisch und/oder plastisch verformbare Dichtungselement als federartiges, wellenartiges, S-förmiges und/oder mäandrierendes Element ausgebildet ist. Das so ausgebildete Dichtungselement ist besonders widerstandsfähig gegenüber äußeren Belastungen, insbesondere hervorgerufen durch Ausdehnungen des Deckbands. Außerdem ist das so ausgebildete Dichtungselement besonders kostengünstig herstellbar.

In weiteren vorteilhaften Ausgestaltungen des erfindungsgemäßen Leitschaufehings ist vorgesehen, dass im Bereich der aneinander angrenzenden Seiten des Außendeckbands und/oder Innendeckbands wenigstens zweier Leitschaufelringsegmente ein Dehnungsspalt ausgebildet ist, in dem mindestens eine Dichtungseinrichtung vorgesehen ist. Dabei kann es sich beispielsweise um eine Labyrinthdichtung handeln, deren Elemente in den jeweiligen aneinandergrenzenden Endbereichen der zwei Leitschaufelringsegmente ausgebildet sind, die dann bei einem Zusammenfügen der Leitschaufelringsegmente die Labyrinthdichtung ausbilden. Des Weiteren ist es möglich, dass der Dehnungsspalt vollständig in einem der aneinandergrenzenden Seitenbereiche des Außendeckbands und/oder Innendeckbands ausgebildet ist oder der Dehnungsspalt anteilig durch entsprechende aneinandergrenzende Ausnehmungen in den aneinandergrenzenden Seitenbereichen des Außendeckbands und/oder Innendeckbands ausgebildet ist. Bei diesen Ausführungsformen der Erfindung kann auch eine Leckage in den Verbindungsbereichen zwischen Leitschaufelringsegmenten verhindert oder zumindest reduziert werden. Gleichzeitig kann so auch zwischen den Leitschaufelringsegmenten ein Dehnungsspalt vorgesehen sein, um Belastungen des Leitschaufelrings insgesamt zu reduzieren.

Ein zweiter Aspekt der Erfindung betrifft eine Gasturbine, insbesondere ein Flugtriebwerk. Sowohl eine Gasturbine als auch ein Flugtriebwerk ist eine Strömungsmaschine, welche besonders hohen Anforderungen genügen muss. Insbesondere kommt es zu besonders hohen thermischen Belastungen. Gleichzeitig muss eine Gasturbine, insbesondere ein Flugtriebwerk, besonders effizient arbeiten. Aus diesem Grund ist es besonders vorteilhaft, den erfindungsgemäßen Leitschaufelring bei einer Gasturbine, insbesondere einem Flugtriebwerk, einzusetzen. Weitere Merkmale und deren Vorteile des zweiten Aspekts der Erfindung sind dabei der Beschreibung des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft ein Verfahren zur additiven Herstellung eines Leitschaufelrings für eine Strömungsmaschine mit mindestens einem Leitschaufelringsegment umfassend mindestens eine radial um eine Drehachse angeordnete Leitschaufel, ein an der Leitschaufel radial außenseitig angeordnetes Außendeckband und ein an den Leitschaufeln radial innenseitig angeordnetes Innendeckband, wobei das Außendeckband oder das Innendeckband mindestens einen Dehnungsspalt aufweist, Dabei umfasst das Verfahren zumindest folgende Schritte:
- Lokales Aufschmelzen einer Pulverschicht oder einer Flüssigkeitsschicht mittels eines durch eine Strahlungsquelle erzeugten und durch eine Ablenkeinrichtung abgelenkten Hochenergiestrahls zum lokalen Verschmelzen und/oder Versintern der Pulverschicht oder der Flüssigkeitsschicht zu einer ersten Bauteilschicht;
- Aufbringen und lokales Aufschmelzen weiterer Pulverschichten oder Flüssigkeitsschichten auf der ersten Bauteilschicht zum lokalen Erzeugen weiterer Bauteilschichten auf der ersten Bauteilschicht;
- Wiederholen des Aufbringens und lokalen Aufschmelzen der Pulverschicht oder Flüssigkeitsschicht zum einstückigen Herstellen der Leitschaufeln, des Außendeckbands, des Innendeckbands und jeweils mindestens einer in dem mindestens einen Dehnungsspalt angeordneten Dichtungseinrichtung, mittels welcher dieser Dehnungsspalt abgedichtet ist.

Mittels des erfindungsgemäßen Verfahrens zur additiven Herstellung eines Leitschaufelrings lässt sich besonders kostengünstig der Leitschaufelring gemäß dem ersten Aspekt der Erfindung herstellen. Der erfindungsgemäße Leitschaufelring kann als integraler Leitschaufelring einstückig in einem einzigen Herstellungsschritt hergestellt werden. Das heißt, alle Komponenten des Leitschaufelrings können direkt in einem einzigen Prozessschritt kostengünstig und schnell gefertigt werden. Insbesondere kann es bei dem additiven Verfahren um ein generatives Herstellungsverfahren wie selektives Lasersintern oder selektives Laserschmelzen handeln.

Weitere Merkmale und deren Vorteile sind den Beschreibungen des ersten und zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigen in:
- Fig. 1: eine ausschnittsweise schematische Ansicht eines Leitschaufehings für eine Strömungsmaschine;
- Fig. 2: eine ausschnittsweise schematische Schnittansicht eines Innendeckbands des Leitschaufelrings gemäß Fig. 1 mit einem Dehnungsspalt und eine erste Ausführungsform einer Dichtungseinrichtung;
- Fig. 3: eine schematische Schnittansicht einer zweiten Ausführungsform der Dichtungseinrichtung; und
- Fig. 4: eine schematische Schnittansicht einer dritten Ausführungsform der Dichtungseinrichtung.

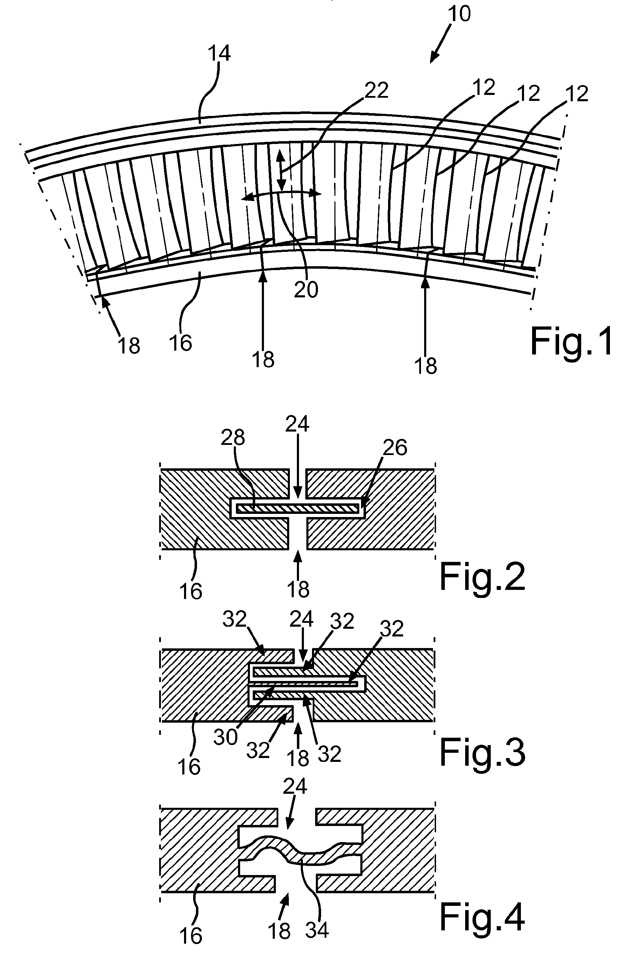

Fig. 1 zeigt in einer ausschnittsweisen schematischen Ansicht einen Leitschaufelring 10 für eine Strömungsmaschine. Die Strömungsmaschine kann beispielsweise eine Gasturbine sein, insbesondere ein Flugtriebwerk. Dieser Leitschaufelring 10 umfasst eine Vielzahl von radial um eine Drehachse angeordnete Leitschaufeln 12. Die radiale Richtung ist durch Pfeil 22 markiert. Mittels dieser Leitschaufeln 12 kann eine Gasströmung, welche durch die Strömungsmaschine strömt, beeinflusst werden. Insbesondere kann die Gasströmung mittels des Leitschaufelrings 10 umgelenkt werden und/oder Verwirbelungen in der Gasströmung reduziert werden. Dadurch wird der Wirkungsgrad der Strömungsmaschine erhöht. Der Leitschaufelring 10 kann beispielsweise vor oder hinter einem Laufschaufelring einer Turbine oder einem Verdichter der Strömungsmaschine angeordnet sein.

In dem in Fig. 1 gezeigten Ausführungsbeispiel umfasst der Leitschaufelring 10 nur ein einziges, 360° um die Drehachse umlaufendes Leitschaufelringsegment. Dadurch können keine Leckagen zwischen verschiedenen Leitschaufelringsegmenten entstehen. Außerdem ist ein solcher, integraler Leitschaufelring 10 besonders robust. Alternativ kann der Leitschaufelring 10 auch mehrere, insbesondere zwei Leitschaufelringsegmente umfassen. Dann ist der Leitschaufelring 10 besonders einfach zu montieren. Dabei kann der Leitschaufelring 10 in diesem Fall radial montiert werden. Gerade bei geteilten Strömungsmaschinen ist dies von Vorteil.

Der Leitschaufelring 10 umfasst zudem ein an den Leitschaufeln 12 radial außenseitig angeordnetes Außendeckband 14 und ein an den Leitschaufeln 12 radial innenseitig angeordnetes Innendeckband 16. Im in Fig. 1 gezeigten Beispiel ist der Leitschaufelring 10 beispielsweise mittels des Außendeckbands 14 an der Strömungsmaschine gelagert. Das Innendeckband 16 weist eine Mehrzahl von entlang der Umfangsrichtung voneinander beabstandeten Dehnungsspalten 18 auf. Die Umfangsrichtung ist dabei durch Pfeil 20 markiert. Mittels der Dehnungsspalte 18 kann eine Ausdehnung des Leitschaufelrings 10 und insbesondere des Innendeckbands 16 kompensiert werden. Eine solche Dehnung kann beispielsweise durch eine thermische Belastung während eines Betriebs der Strömungsmaschine hervorgerufen werden.

Der Leitschaufelring 10 mit den Leitschaufeln 12, dem Außendeckband 14 und dem Innendeckband 16 ist mittels einem additiven Fertigungsverfahren einstückig hergestellt. Ein solcher Leitschaufelring 10, welcher auch als Leitschaufelkranz bezeichnet werden kann, wird auch als integraler Leitschaufelring 10 bezeichnet. Gerade bei besonders großen Strömungsmaschinen und/oder Strömungsmaschinen mit besonders hohen Temperaturen sind die Dehnungsspalte 18 notwendig, damit der Leitschaufelring 10 den Belastungen während des Betriebs der Strömungsmaschine standhalten kann. Andernfalls können bei besonders großen Strömungsmaschinen, wie beispielsweise Flugtriebwerken, ohne Dehnungsspalte 18 Risse an dem Leitschaufelring 10 auftreten. Durch die Dehnungsspalte 18 kann jedoch ein die Leitschaufeln 12 umströmender Gasstrom wenigstens teilweise entweichen. Eine solche Leckage führt zu einer reduzierten Effizienz der Strömungsmaschine. Der Wirkungsgrad der Strömungsmaschine kann also durch die Dehnungsspalte 18 sinken.

Aus diesem Grund ist jeder Dehnungsspalt 18 mittels jeweils mindestens einer in dem jeweiligen Dehnungsspalt 18 angeordneten Dichtungseinrichtung 24 abgedichtet. Ein erstes Ausführungsbeispiel solch einer Dichtungseinrichtung 24 ist beispielsweise in der ausschnittsweisen schematischen Schnittansicht des Leitschaufehings 10 in Fig. 2 gezeigt. Die Dichtungseinrichtung 24 umfasst hier jeweils ein lose in einem Aufnahmebereich 26 der jeweiligen Dehnungsspalte 18 gelagertes Dichtungselement 28. Das Dichtungselement 28 ist hier beispielsweise als Scheibe ausgebildet. Zwischen dem Dichtungselement 28 und den Seiten des Innendeckbands 16, welche den Dehnungsspalt 18 begrenzen, sind in dem Aufnahmeraum 26 Fugen vorgesehen, welche eine unterschiedliche Ausdehnung des Dichtungselements 28 und des Innendeckbands 16 kompensieren können. Das Dichtungselement 28 wird beispielsweise durch unterschiedliche Gasdrücke so gegen den oberen oder unteren Rand des Aufnahmeraums 26 gedrückt, dass der Dehnungsspalt 18 wenigstens teilweise oder sogar vollständig abgedichtet ist. Eine gemäß dem ersten Ausführungsbeispiel ausgebildete Dichtungseinrichtung 24 ist besonders robust.

Fig. 3 zeigt in einer ausschnittsweisen Schnittansicht eine zweite Ausführungsform der Dichtungseinrichtung 24. In Fig. 3 ist die Dichtungseinrichtung 24 als Labyrinthdichtung 30 einstückig mit dem die Dehnungsspalte 18 aufweisenden Innendeckband 16 ausgebildet. Die Labyrinthdichtung 30 wird dabei durch jeweilige zapfenförmige Endbereiche 32 der den Dehnungsspalt 18 begrenzenden Seiten des Innendeckbands 16 gebildet. Die Dichtungseinrichtung 24 gemäß der zweiten Ausführungsform ist besonders robust und kann die Strömungsmaschine beziehungsweise die Dehnungsspalte 18 besonders gut abdichten. Zudem weist diese Dichtungseinrichtung 24 keine beweglichen Teile auf.

Fig. 4 zeigt in einer weiteren ausschnittsweisen Schnittansicht des Leitschaufelrings 10 beispielhaft eine dritte Ausführungsform der Dichtungseinrichtung 24. In diesem Fall umfasst die Dichtungseinrichtung 24 ein elastisch und/oder plastisch verformbares Dichtungselement 34, welches als federartiges und mäandrierendes Element ausgebildet ist. Das Dichtungselement 34 ist dabei ebenfalls einstückig mit dem die Dehnungsspalte 18 aufweisenden Innendeckband 16 ausgebildet. Dabei ist das Dichtungselement 34 direkt anschließend an die Seiten des Innendeckbands 16, welche den Dehnungsspalt 18 begrenzen, ausgebildet. Insbesondere ist es so möglich, dass das Dichtungselement 34 den Dehnungsspalt 18 vollständig abdichtet. Durch seine federartige und mäandrierende Ausgestaltung kann das Dichtungselement 34 eine Ausdehnung des Innendeckbands 16 besonders gut kompensieren. Das Dichtungselement 34 kann sich dann entsprechend verformen, ohne dass es zu Einbußen bei seiner Dichtwirkung oder zu einer Beschädigung der Dichtungseinrichtung 24 oder des Leitschaufelrings 10 kommt.

Alternativ zu den Dehnungsspalten 18 in dem Innendeckband 16 können die Dehnungsspalten 18 auch in dem Außendeckband 14 vorgesehen sein (nicht dargestellt). Dies kann insbesondere vorteilhaft sein, wenn der Leitschaufelring 10 an seinem Innendeckband 16 an der Strömungsmaschine gelagert werden soll. Außerdem kann dies besonders vorteilhaft sein, wenn die höchste thermische Belastung des Leitschaufehings 10 auf das Außendeckband 14 und nicht das Innendeckband 16 wirkt.

Vorzugsweise sind alle Komponenten des Leitschaufehings 10, insbesondere die Leitschaufeln 12, das Außendeckband 14, das Innendeckband 16 und die Dichtungseinrichtung 24 aus dem gleichen Material, wie beispielsweise einer Nickelbasislegierung, gebildet. In diesem Fall ist das additive Herstellungsverfahren zum Herstellen des Leitschaufehings 10 besonders kostengünstig und einfach. Außerdem sind so alle Komponenten des Leitschaufehings 10 besonders gut miteinander verbunden und weisen homogene Materialeigenschaften auf, insbesondere unter thermischer Belastung. Alternativ können einzelne Teile und/oder Teilbereiche des Leitschaufehings 10 auch aus unterschiedlichen Materialien bestehen. Dann kann der Leitschaufelring 10 besonders belastungsgerecht konstruiert werden.

Dadurch, dass der Leitschaufelring 10 mittels eines additiven Herstellungsverfahrens, wie zum Beispiel selektives Laserschmelzen oder Lasersintern, hergestellt ist, kann man die Dichtungseinrichtung 24 und/oder deren Dichtungselemente 28, 34 in einer Art und Weise gestalten, wie dies bei anderen Herstellungsverfahren nicht möglich ist. Insbesondere ist es dadurch möglich, eine Dichtungseinrichtung 24 zu schaffen, welche die Dehnungsspalte 18 besonders gut oder sogar komplett abdichtet. Außerdem ist der Leitschaufelring 10 so besonders kostengünstig herstellbar, da keine weiteren Fertigungsschritte und/oder Montageschritte für die Dichtungseinrichtung 24 notwendig sind. Gerade ein einstückiger Leitschaufelring 10 ist zudem besonders robust.

### Bezugszeichenliste

- 10: Leitschaufelring
- 12: Leitschaufel
- 14: Außendeckband
- 16: Innendeckband
- 18: Dehnungsspalt
- 20: Pfeil
- 22: Pfeil
- 24: Dichtungseinrichtung
- 26: Aufnahmeraum
- 28: Dichtungselement
- 30: Labyrinthdichtung
- 32: Endbereich
- 34: Dichtungselement

## Patentansprüche

1. Leitschaufelring (10) für eine Strömungsmaschine mit mindestens einem Leitschaufelringsegment umfassend mindestens eine radial um eine Drehachse angeordnete Leitschaufel (12), ein an der Leitschaufel (12) radial außenseitig angeordnetes Außendeckband (14) und ein an der Leitschaufel (12) radial innenseitig angeordnetes Innendeckband (16), wobei das Außendeckband (14) oder das Innendeckband (16) mindestens einen Dehnungsspalt (18) aufweist,
**dadurch gekennzeichnet, dass**
das Leitschaufehingsegment mit der Leitschaufel (12), dem Außendeckband (14) und dem Innendeckband (16) einstückig ausgebildet ist und der mindestens eine Dehnungsspalt (18) mittels mindestens einer in dem Dehnungsspalt (18) angeordneten Dichtungseimichtung (24) abgedichtet ist.

2. Leitschaufelring (10) nach Anspruch 1,
**dadurch gekennzeichnet, dass**
das Leitschaufelringsegment mit einem additiven Fertigungsverfahren hergestellt ist.

3. Leitschaufelring (10) nach einem der Ansprüche 1 oder 2,
**dadurch gekennzeichnet, dass**
der Leitschaufelring (10) aus einem einzigen, 360° um die Drehachse umlaufenden Leitschaufelringsegment besteht.

4. Leitschaufelring (10) nach einem der vorhergehenden Ansprüche,
**dadurch gekennzeichnet, dass**
die Dichtungseimichtung (24) einstückig mit dem Außendeckband (14) oder dem Innendeckband (16) hergestellt ist.

5. Leitschaufelring (10) nach einem der Ansprüche 1 bis 4,
**dadurch gekennzeichnet, dass**
das Innendeckband (16) und das Außendeckband (14) die Dehnungsspalte (18) aufweist.

6. Leitschaufelring (10) nach einem der vorhergehenden Ansprüche,
**dadurch gekennzeichnet, dass**
die Dichtungseimichtung (24) und das Außendeckband (14) und/oder das Innendeckband (16) aus dem gleichen Material ausgebildet sind.

7. Leitschaufelring (10) nach einem der vorhergehenden Ansprüche,
**dadurch gekennzeichnet, dass**
die Dichtungseinrichtung (24) ein lose in einem Aufnahmebereich (26) des Dehnungsspalts (18) gelagertes Dichtungselement (28) umfasst.

8. Leitschaufelring (10) nach einem der Ansprüche 1 bis 6,
**dadurch gekennzeichnet, dass**
die Dichtungseimichtung (24) als Labyrinthdichtung (30) einstückig mit dem die Dehnungsspalte (18) aufweisenden Außendeckband (14) oder Innendeckband (16) ausgebildet ist.

9. Leitschaufelring (10) nach einem der Ansprüche 1 bis 6,
**dadurch gekennzeichnet, dass**
die Dichtungseimichtung (24) ein elastisch und/oder plastisch verformbares Dichtungselement (34) aufweist, welches einstückig mit dem die Dehnungsspalte (18) aufweisenden Außendeckband (14) oder Innendeckband (16) ausgebildet ist.

10. Leitschaufelring (10) nach Anspruch 9,
**dadurch gekennzeichnet, dass**
das elastisch und/oder plastisch verformbare Dichtungselement (34) als federartiges, wellenartiges, S-förmiges und/oder mäandrierendes Element ausgebildet ist.

11. Leitschaufelring (10) nach einem der vorhergehenden Ansprüche,
**dadurch gekennzeichnet, dass**
im Bereich der aneinander angrenzenden Seiten des Außendeckbands (14) und/oder Innendeckbands (16) wenigstens zweier Leitschaufelringsegmente ein Dehnungsspalt (18) ausgebildet ist, in dem mindestens eine Dichtungseinrichtung angeordnet ist.

12. Leitschaufelring (10) nach Anspruch 11,
**dadurch gekennzeichnet, dass**
der Dehnungsspalt (18) vollständig in einem der aneinandergrenzenden Seitenbereiche des Außendeckbands (14) und/oder Innendeckbands (16) ausgebildet ist oder der Dehnungsspalt (18) anteilig durch entsprechende aneinandergrenzende Ausnehmungen in den aneinandergrenzenden Seitenbereichen des Außendeckbands (14) und/oder Innendeckbands (16) ausgebildet ist.

13. Gasturbine, insbesondere Flugtriebwerk, mit mindestens einem Leitschaufelring (10) nach einem der vorhergehenden Ansprüche.

14. Verfahren zur additiven Herstellung eines Leitschaufehings (10) für eine Strömungsmaschine mit mindestens einem Leitschaufelringsegment umfassend mindestens eine radial um eine Drehachse angeordnete Leitschaufel (12), ein an der Leitschaufel (12) radial außenseitig angeordnetes Außendeckband (14) und ein an der Leitschaufel (12) radial innenseitig angeordnetes Innendeckband (16), wobei das Außendeckband (14) oder das Innendeckband (16) mindestens einen Dehnungsspalt (18) aufweist,
umfassend zumindest folgende Schritte:
- Lokales Aufschmelzen einer Pulverschicht oder einer Flüssigkeitsschicht mittels eines durch eine Strahlungsquelle erzeugten und durch eine Ablenkeinrichtung abgelenkten Hochenergiestrahls zum lokalen Verschmelzen und/oder Versintern der Pulverschicht oder der Flüssigkeitsschicht zu einer ersten Bauteilschicht;
- Aufbringen und lokales Aufschmelzen weiterer Pulverschichten oder Flüssigkeitsschichten auf der ersten Bauteilschicht zum lokalen Erzeugen weiterer Bauteilschichten auf der ersten Bauteilschicht;
- Wiederholen des Aufbringens und lokalen Aufschmelzen der Pulverschicht oder Flüssigkeitsschicht zum einstückigen Herstellen der Leitschaufel (12), des Außendeckbands (14), des Innendeckbands (16) und jeweils mindestens einer in dem mindestens einen Dehnungsspalt (18) angeordneten Dichtungseinrichtung (24), mittels welcher dieser Dehnungsspalt (18) abgedichtet ist.

15. Verfahren nach Anspruch 14, **dadurch gekennzeichnet, dass** das Verfahren ein generatives Herstellungsverfahren, insbesondere ein selektives Laserschmelzen oder Lasersintern ist.
